# EUROPEAN PATENT SPECIFICATION

(11) **EP 1 361 942 B1**
(45) Date of publication and mention of the grant of the patent: **17.09.2008**
(21) Application number: 01273819.1
(22) Date of filing: 27.09.2001
(51) Int. Cl.: B29C 33/52, B29L 22/00

(54) **METHOD FOR PRODUCING MODELS**
VERFAHREN ZUR HERSTELLUNG VON MODELLEN
PROC D DE PRODUCTION DE MAQUETTES

(30) Priority: 23.02.2001 EP 01810190
(43) Date of publication of application: 19.11.2003
(73) Proprietor: Huntsman Advanced Materials (Switzerland) GmbH, 4057 Basel (CH)
(72) Inventor: HOCHWALD, Peter, 79664 Wehr (DE)
(74) Representative: Hedley, Nicholas James Matthew
(86) International application number: PCT/EP2001/011214
(87) International publication number: WO 2002/068167

(56) References cited:
- DE-A- 19 534 836
- US-A- 5 184 874
- DATABASE WPI Section Ch, Week 8437, September 1984 (1984-09) Derwent Publications Ltd., London, GB; Class A32, AN 1984-228589[37] XP002173854 & JP 59 136214 A (NIIGATA ENG CO LTD), 4 August 1984 (1984-08-04)

## Description

The present invention relates to a method for producing models or pre-forms by the "lost core" method, according to the preamble of claim 1.

A method of this kind is known from e.g. JP-A- 59-136 214.

A conventional method for producing plastics models of complex mouldings having cavities requires a negative prototype to be modelled from a block material, which is then coated or filled with a curable polymer. After the polymer has been fully cured, the inner block material is removed ("lost core"). Depending upon the nature of the block material used and of the polymer cured, removal is carried out by melting or by dissolving in a suitable solvent. Wax, polystyrene or other meltable plastics mixtures have hitherto been used as block materials. In SAMPE Journal, Vol. 36, No. 4, 46-48 (2000), a polyisocyanurate foam is proposed for producing motor housings. The polyisocyanurate foam is easy to process, is temperature resistant up to 180° C and is compatible with various synthetic resins, for example epoxides, bismaleimides and phenolic resins. Removal of the block material is carried out using high pressure washing systems.

JP-A-59-136214 describes a method of forming an article having hollow cavities by making cores out of a water-soluble material, placing the cores into a mould, injection moulding a liquid-polymer around the cores to make the article. The cavities are formed by dissolving out the water-soluble material with water. A similar process is described in DE-A-195 34 836.

The object of the present invention is to simplify the known methods and to reduce the amount of waste.

This object is achieved according to the present invention by the method for producing models or pre-forms as defined in claim 1.

Particular embodiments of the invention are the subject of the dependent claims.

The environmental burden of the method according to the invention is minimal because no organic solvents are used and the water-soluble block material can be recovered and recycled.

Production of the shaped core in method step (a) is carried out by known shaping methods, for example milling, grinding, casting or compression moulding.

The water-soluble block material should be capable of being shaped easily and have some degree of temperature-resistance.
Preferred block materials are water-soluble polymers, for example polyacrylic acid, polymethacrylic acid and, especially, polyvinyl alcohol.

It is advantageous to apply a parting agent to the shaped core before it is coated with the curable polymer. Suitable parting agents are, for example, fatty acids, fatty acid esters, fatty acid salts, e.g. zinc stearate or calcium stearate, and silicones. Instead of coating with a parting agent, it is also possible to wrap the shaped core with a Teflon tape.

The polymer used in method step (b) can be a thermally curable or radiation-curable polymer. Preference is given to the use of a thermally curable (thermosetting) polymer.

Suitable curable polymers are, for example, epoxy resins, phenolic resins, unsaturated polyesters, bismaleimides, polyimides and polyurethanes.

Special preference is given to epoxy resins.

Examples of suitable epoxy resins are diglycidyl ethers of bisphenols, e.g. diglycidyl ether of bisphenol A and diglycidyl ether of bisphenol F, epoxy phenol novolaks, epoxy cresol novolaks, cycloaliphatic epoxy resins, e.g. 3,4-epoxycyclohexylmethyl 3',4'-epoxycyclohexanecarboxylate, diglycidyl tetrahydrophthalate, diglycidyl 4-methyltetrahydrophthalate, diglycidyl hexahydrophthalate and diglycidyl 4-methylhexahydrophthalate, and N-glycidyl compounds such as triglycidyl isocyanurate.

The curable polymer can comprise customary auxiliaries and additives, for example antioxidants, light stabilisers, flame retardants, fillers, plasticisers, dyes, pigments, thixotropic agents, toughness improvers, antifoams, antistatics, lubricants and mould-release aids.

The curable polymer preferably comprises fillers in powder form, for example quartz powder or aluminium oxide.

The curable polymer is then fully cured at room temperature or at elevated temperature, the curing temperature and duration of curing depending both on the nature of the curable polymer and on the hardener and/or accelerator chosen. Suitable hardeners and curing accelerators will be well known to the person skilled in the art.
Preference is given to the selection of a resin/hardener system that fully cures in the temperature range from 50 to 150° C, especially from 80 to 140° C.

The curing process can be carried out at normal pressure in an oven or under pressure in an autoclave.

After curing of the polymer, the shaped core can be removed very simply by dissolving in water. Most simply, that is carried out by immersing the coated core in a water bath. In the case of very soluble block materials, for example polyvinyl alcohol, the use of cold water is sufficient; less readily soluble materials can be removed using warm or hot water or by the use of pressure.

Preference is given to carrying out method step (d) at room temperature (15 - 25° C) and under normal pressure (900-1100 hPa).

After method step (d) has been carried out, the filler optionally contained in the block material can be recovered and put to the same or some other use.

The water-soluble block material can also be completely recovered by evaporating off the water.

### Example 1

A mixture of 10 parts by weight of polyvinyl alcohol and 100 parts by weight of Al₂O₃ - 3H₂O is shaped into a negative model of a hollow article. An epoxy resin/hardener mixture (diglycidyl ether of bisphenol A) is then applied to the negative model. Pretreatment with a parting agent is not necessary. The time for full cure depends on the layer thickness of the block; for each centimetre of layer thickness, curing for 1 hour at at least 60°C is necessary. After full cure, the block material is dissolved out from the inside of the hollow article in water.

### Example 2

A mixture of 20 parts by weight of polyvinyl alcohol and 100 parts by weight of ALU DIN 100 (aluminium powder, 100 µm) is shaped into a negative model of a hollow article. An epoxy resin/hardener mixture (diglycidyl ether of bisphenol A) is then applied to the negative model.
Pretreatment with a parting agent is not necessary. The time for full cure depends on the layer thickness of the block; for each centimetre of layer thickness, curing for 1 hour at at least 60°C is necessary. After full cure, the block material is dissolved out from the inside of the hollow article in water.

## Claims

1. A method for producing models or pre-forms, comprising the following method steps:
(a) producing a shaped core from a water-soluble block material,
(b) applying a curable polymer to the shaped core,
(c) curing the curable polymer at from 25 to 250° C, and
(d) removing the core material by treating the coated core with water.
**characterised in that** the polymer is applied to the shaped core by coating the shaped core with the curable polymer using a filament winding technique.

2. A method according to claim 1, wherein a water-soluble polymer is used as the block material in method step (a).

3. A method according to claim 2, wherein polyvinyl alcohol is used as the block material in method step (a).

4. A method according to claim 1, wherein the curable polymer in method step (b) is selected from epoxy resins, phenolic resins, unsaturated polyesters, bismaleimides, polyimides and polyurethanes.

5. A method according to claim 1, wherein the curing of the curable polymer in method step (c) is carried out at from 50 to 150° C.

6. A method according to claim 1, wherein method step (d) is carried out at room temperature of 15-25° C and under normal pressure of 900-1100 hPa.

## Patentansprüche

1. Verfahren zum Herstellen von Modellen oder Vorformen, welches die folgenden Verfahrensschritte umfasst:
(a) Herstellen eines geformten Kerns aus einem wasserlöslichen Blockmaterial,
(b) Auftragen eines härtbaren Polymers auf den geformten Kern,
(c) Härten des härtbaren Polymers bei von 25 bis 250°C, und
(d) Entfernen des Kernmaterials durch Behandeln des überzogenen Kerns mit Wasser,
**dadurch gekennzeichnet, dass** das Polymer auf den geformten Kern durch Überziehen des geformten Kerns mit dem härtbaren Polymer unter Verwendung einer Faserwickeltechnik aufgetragen wird.

2. Verfahren gemäß Anspruch 1, worin ein wasserlösliches Polymer als das Blockmaterial in Verfahrensschritt (a) verwendet wird.

3. Verfahren gemäß Anspruch 2, worin Polyvinylalkohol als das Blockmaterial in Verfahrensschritt (a) verwendet wird.

4. Verfahren gemäß Anspruch 1, worin das härtbare Polymer in Verfahrensschritt (b) ausgewählt wird aus Epoxidharzen, Phenolharzen, ungesättigten Polyestern, Bismaleimiden, Polyimiden und Polyurethanen.

5. Verfahren gemäß Anspruch 1, worin das Härten des härtbaren Polymers in Verfahrensschritt (c) bei von 50 bis 150°C durchgeführt wird.

6. Verfahren gemäß Anspruch 1, worin Verfahrensschritt (d) bei Raumtemperatur von 15-25°C und unter normalem Druck von 900-1100 hPa durchgeführt wird.

## Revendications

1. Procédé de production de maquettes ou d'ébauches, comprenant les étapes suivantes :
(a) on produit un noyau moulé à partir d'un matériau en bloc soluble dans l'eau,
(b) on applique un polymère durcissable au noyau moulé,
(c) on durcit le polymère durcissable à une température de 25 à 250 °C, et
(d) on retire le matériau du noyau en traitant le noyau revêtu avec de l'eau,
**caractérisé en ce que** le polymère est appliqué au noyau moulé en revêtant le noyau moulé du polymère durcissable en utilisant une technique d'enroulement filamentaire.

2. Procédé selon la revendication 1, dans lequel un polymère soluble dans l'eau est utilisé comme matériau en bloc à l'étape (a) du procédé.

3. Procédé selon la revendication 2, dans lequel de l'alcool polyvinylique est utilisé comme matériau en bloc à l'étape (a) du procédé.

4. Procédé selon la revendication 1, dans lequel le polymère durcissable à l'étape (b) du procédé est choisi parmi les résines époxydes, les résines phénoliques, les polyesters insaturés, les bismaléimides, les polyimides et les polyuréthannes.

5. Procédé selon la revendication 1, dans lequel le durcissement du polymère durcissable à l'étape (c) du procédé est réalisé à une température de 50 à 150 °C.

6. Procédé selon la revendication 1, dans lequel l'étape (d) du procédé est effectuée à température ambiante de 15 à 25 °C et sous pression normale de 900 à 1100 hPa.
